Europäisches Patentamt

European Patent Office

Office européen des brevets

(11) Veröffentlichungsnummer: **0 303 794**
**B1**

(12) **EUROPÄISCHE PATENTSCHRIFT**

(45) Veröffentlichungstag der Patentschrift: **06.02.91**

(51) Int. Cl.⁵: **A 45 D 31/00,** A 45 D 29/00

(21) Anmeldenummer: **88109739.8**

(22) Anmeldetag: **18.06.88**

(54) **Fingernagel-Bestrahlungsgerät.**

(30) Priorität: **21.08.87 DE 3727916**

(43) Veröffentlichungstag der Anmeldung:
**22.02.89 Patentblatt 89/08**

(45) Bekanntmachung des Hinweises auf die
Patenterteilung:
**06.02.91 Patentblatt 91/06**

(84) Benannte Vertragsstaaten:
**AT BE CH DE ES FR GB GR IT LI LU NL SE**

(56) Entgegenhaltungen:
**EP-A-0 201 107
DE-U-8 609 293**

(73) Patentinhaber: **Kulzer GmbH
Philipp-Reis-Strasse 8
D-6393 Wehrheim (TS.)1 (DE)**

(72) Erfinder: **Grimm, Ekkehard
Blumenstrasse 44
D-6050 Offenbach/Main (DE)**

(74) Vertreter: **Heinen, Gerhard, Dr.
Heraeus Holding GmbH Heraeusstrasse 12-14
D-6450 Hanau am Main (DE)**

Courier Press, Leamington Spa, England.

**Beschreibung**

Die vorliegende Erfindung betrifft ein Fingernagel-Bestrahlungsgerät zur Aushärtung von lichthärtenden Kunststoffen an künstlichen Fingernägeln mit einem einseitig eine Einführöffnung aufweisenden Gehäuse, das auf einer als Auflage dienenden Bodenplatte angeordnet ist, und mit mindestens einer langgestreckten Strahlenquelle, insbesondere einer UV-Strahlenquelle, die mit Abstand zur Bodenplatte symmetrisch zur Gehäuse-Längsachse und zur Bodenplatte befestigt ist und auf ihrer der Bodenplatte abgewandten Seite von mindestens einem Reflektor umgeben ist.

Ein derartiges Fingernagel-Bestrahlungsgerät ist aus dem DE—GM 85 13 789 bekannt. Dieses Gerät weist eine Auflageplatte auf mit mehreren Niederdruckleuchtstoffröhren, die parallel zueinander in Richtung der Gehäuse-Längsachse verlaufend angeordnet sind und einen Tunnel bilden. Die eingesetzten Lampen strahlen mit Wellenlängen von 320 nm bis 325 nm, vorzugsweise mit Wellenlängen von 360 nm bis 450 nm, um künstlichen Nagelersatz auszuhärten.

Aus dem TECHNICAL BULLETIN No. 7070 der Lee pharmaceuticals, St. Anita, California, USA, das auf das Jahr 1975 zurückgeht, wird unter der Überschrift "LEE UV NAILS" ebenfalls ein Bestrahlungsgerät zur Aushärtung von künstlichem Nagelersatz beschrieben das vom Grundkonzept ähnlich dem Gerät nach dem DE—GM 85 13 789 aufgebaut ist, mit einer oder mehreren im Abstand zu einer Auflage angeordneten und an einem Tr äger gesockelten Strahlenquelle(n). Bei diesem Gerät wird die zu bestrahlende Hand durch einen Schlitz in der Gehäusewand unter die Strahlenquele geschoben.

Ein weiteres Gerat zur Aushärtung von lichthärtenden Kunststoffen an Fingernägeln ist aus de DE—GM 86 09 293 bekannt. Dieses Gerät ist mit mehreren, in einer konkreten Ausgestaltung vier, länglichen UV-Strahlenquellen bestückt, die einen Tunnel bildend angeordnet sind; dieses Gerät ist in seinem Aufbau dem aus dem DE—GM 85 13 789 bekannten Gerät gleich. Das Gehäuse dieses Gerätes kann um eine hintere Achse nach oben geschwenkt werden, so daß der Innenraum zugänglich ist. Die Strahlenquellen sind an der Auflageplatte befestigt, so daß sie bei hochgeklapptem Deckel nicht mitverschwenkt werden und oberhalb der Auflageplatte verbleiben.

Schließlich ist in der Werbeschrift "TAMI NAIL LIGHT SYSTEM — Lichthärtendes Gel-System für die Fingernagelkosmetik" der Firma TAMARA KOSMETIK, 8000 München, ein Lichtgerät gezeigt, das von seinem äußeren Aufbau dem Gerät nach dem DE—GM 86 09 293 entspricht.

Die vorstehend angeführten Geräte werden benötigt, um die an kurzen oder abgebrochenen Fingernägeln angesetzten, sogenannten Tips, die mit UV-härtenden Kunststoffen beigearbeitet werden, auszuhärten. Solcher Nagelersatz sowie die hierfür notwendigen Kunststoffe zum Beiarbeiten der Übergangsstellen sind in der DE—OS 25 53 138 sowie der US—PS 4,058,442 beschrieben. Zum Ansetzen eines künstlichen Fingernagels wird zunächst der natürliche Fingernagel rund gefeilt und der Tip, der auf seiner Unterseite einen Vorsprung aufweist, der sich an den rund vorgeschliffenen, natürlichen Fingernagel anlegt, angesetzt und verklebt. Der Tip, der auf der Oberseite des natürlichen Fingernagels ausläuft, muß anschließend beigearbeitet werden, um die Absätze auszugleichen. Hierbei wird eine Kunststoffmasse wiederholt aufgetragen, die zwischen jedem Auftag jeweils in einem Fingernagel-Bestrahlungsgerät ausgehärtet sowie von Hand geschliffen und poliert wird. Da bei der Verlängerung aller Fingernägel einer Hand die einzelnen Arbeitsschritte jeweils gleichzeitig vorgenommen werden müssen die Bestrahlungsgeräte dazu geeignet sein, alle fünf Nägel der in das Gerät eingeschobenen Hand zum Aushärten der Kunststoffmassen gleichmäßig zu bestrahlen. Hinzu kommt, daß das Bestrahlungsgerät zur gleichmäßigen Bestrahlung sowohl der linken als auch der rechten Hand geeignet sein sollte; die bekannten Geräte zeigen hierin unterschiedlich gute Ergebnisse. Darüber hinaus sollte ein solches Bestrahlungsgerät mit einer geringen Anzahl an Strahlenquellen auskommen, nur die Bereiche der Fingernägel bestrahlen und auch für Hände unterschiedlicher Größe geeignet sein.

Der vorliegenden Erfindung liegt nun die Aufgabe zugrunde, ausgehend von einem Bestrahlungsgerät, wie es eingangs beschrieben ist, ein Gerät zu schaffen, das den aufgezeigten Anforderungen gerecht wird und das insbesondere eine gleichmäßige Bestrahlung aller Fingernägel sowohl der linken als auch der rechten Hand ermöglicht.

Gelöst wird diese Aufgabe dadurch daß die mindestens eine Strahlenquelle symmetrisch zur Gehäuse-Längsachse und zur Bodenplatte einen Bogenabschnitt beschreibend angeordnet ist mit zur Einführöffnung weisender Öffnung des Bogenabschnittes, wobei der die Gehäuse-Längsachse schneidende Bereich der Strahlenquelle in einem größeren Abstand zur Bodenplatte verläuft als deren Endabschnitte derart, daß die durch die Strahlenquelle aufgespannte Fläche zur Einführöffnung hin geneigt ist, und wobei der Bogenabschnitt Teil der Außenkontur eines Flächenelementes eines Rotationskörpers von einem Kegelschnitt ist.

Dadurch daß die Strahlenquelle bogenförmig verläuft und in ihrem mittleren Abschnitt in größerem Abstand zur Bodenplatte angeordnet ist als im Bereich ihrer Enden, werden die mittleren Finger im Abstand von oben und die Daumen im Abstand von der Seite bestrahlt. Der Verlauf dieser Lampe ist folglich der Lage der Finger angepaßt. Die beiden Endabschnitte der in Form eines Bogenabschnittes verlaufenden Strahlenquelle bestrahlen in geeigneter Weise entweder den Fingernagel des Daumens der linken oder der auf die Bodenplatte aufgelegten rechten Hand. Mit dieser Anordnung ist es möglich, den Bereich der Fingernägel gezielt zum Aushärten der aufgetragenen Kunststoffmasse zu bestrahlen. Die Form des Bogenabschnittes als Teil der Außenkontur eines Flächenelementes eines Rotationskörpers von einem Flächenelement ergibt kreisbogenförmige, parabolische oder ellipsenförmige Konturen, wobei die beiden letztgenannten Formen als bevorzugt anzusehen sind.

Die Strahlenquellen sollten einen Bogenabschnitt von mindestens 180°, bevorzugt zwischen 200° und 240°, beschreiben. Bei einem Winkelbereich von 200° bis 270° sind die Enden der Strahlenquellen ausreichend weit nach innen geneigt, so daß sie parallel zu den Fingernägeln der Daumen ausgerichtet sind. Um auch längere Fingernägel der Daumen gleichmäßig bestrahlen zu können, sollten die in Richtung der Gehäuse-Längsachse weisenden Endabschnitte der Strahlenquelle(n) geradlinig verlaufen Bevorzugt kann der Bogenabschnitt, entsprechend dem die Achse der Strahlenquelle verlaufen soll, durch einzelne Strahlenquellen angenähert werden, wobei diese einzelnen Strahlenquellen geradlinig sein können. Der Verlauf des Bogenabschnittes kann insbesondere durch drei Strahlenquellen angenähert werden, wobei jeweils eine der Strahlenquellen ein Ende des Bogenabschnittes bildet und die dritte Strahlenquelle quer zur Gehäuse-Längsachse und symmetrisch zu dieser verlaufend angeordnet ist. In dieser Anordnung ist dem Zeigefinger, dem Mittelfinger, dem Ringfinger und dem kleinen Finger die mittlere Strahlenquelle zugeordnet, wobei die anderen Strahlenquellen zur Bestrahlung des einen oder anderen Daumens der linken bzw. rechten Hand dienen. In einer weiteren Anpassung des Bogenabschnittes kann die mittlere Strahlenquelle in zwei Strahlenquellen unterteilt sein, die sich beidseitig zur Gehäuse-Längsachse erstrecken und für den Fall, daß es sich hierbei um gerade UV-Röhren handelt, in einem stumpfen Winkel von etwa 90° oder größer, d.h. bis 140° oder 150°, zueinander ausgerichtet sind.

Wie bereits ausgeführt, sind die Strahlenquellen bevorzugt in Form eines ellipsenförmigen Bogenabschnittes angeordnet, wobei die große Halbachse der Ellipse im rechten Winkel zur Gehäuse-Längsachse verläuft.

Um Strahlungsverluste zu vermeiden, wird die Strahlenquelle zumindest im Bereich der Gehäuse-Längsachse von der der Bodenplatte abgewandten Seite von mindestens einem Reflektor umgeben. Zur gezielten Ausrichtung der Strahlung auf die einzelnen Finger der beiden Hände, kann der mindestens eine Reflektor in mehrere Einzelreflektoren unterteilt werden, die dann mit ihrer Hauptabstrahlrichtung in unterschiedlicher Stellung zur Bodenplatte ausgerichtet werden.

Der oder die Reflektoren, die demmittleren Bereich der Strahlenquelle zugeordnet sind, d.h. die im Bereich der Gehäuse-Längsachse angeordnet sind, sollten mit ihrer Hauptabstrahlrichtung zwischen 5° und 20° zur Flächennormalen der Bodenplatte, bevorzugt unter einem Winkel von 10°, geneigt verlaufen. Hierdurch wird erreicht, daß die Fingernägel der Finger, ausgenommen die Daumen, die in einer natürlichen Handhaltung gewöhnlich leicht nach vorne und schräg nach unten ausgerichtet sind, senkrecht bestrahlt werden. Um die Nägel der Daumen, die zur Seite geneigt verlaufen, senkrecht bestrahlen zu können, sollte die Haupt-Abstrahlungrichtung der im Bereich der Endabschnitte der Strahlenquelle(n) angeordneten Reflektoren in Richtung der Gehäuse-Längsachse geneigt verlaufen, wobei die Abstrahlrichtung mit der Flächennormalen der Bodenplatte einen Winkel zwischen 30° und 60°, bevorzugt etwa im Bereich von 45°, betragen sollte.

Als geeigneter Abstand der Strahlenquellen im Bereich der Enden des Bogenabschnittes zur Gehäuse-Längsachse hat sich 10 bis 20 cm, bevorzugt 15 cm, als geeignet erwiesen. Bei einem Abstand von 15 cm ergibt sich eine lichte Weite zwischen den beiden Enden des Bogenabschnittes bzw. den Enden der Strahlenquellen von 30 cm und damit ein Abstand der Achse der Strahlenquelle zu dem jeweiligen Fingernagel der Daumen von 15 bis 50 mm. Der Abstand in senkrechter Richtung über der Bodenplatte dieser Enden der Strahlenquellen sollte etwa 5 bis 8 cm betragen. In Richtung der Längsachse ist die Größe des Bogenabschnittes derart gewählt, daß der maximale Abstand der im Breich der Gehäuse-Längsachse quer zu dieser bzw. quer über dieser angeordneten Strahlenquellen vom Schnittpunkt der Verbindungslinie zwischen den Enden des Bogenabschnittes mit der Gehäuse-Längsachse zwischen 10 und 15 cm, bevorzugt etwa 15 cm, beträgt.

Der Abstand der Strahlenquellen, die oberhalb der Gehäuse-Längsachse angeordnet sind, zur Bodenplatte sollte daher 5 bis 20 cm, bevorzugt etwa 5 bis 6 cm, betragen, so daß sich ein Abstand der Achse der Strahlenquellen von der Oberseite der Fingernägel, zumindest zu dem Fingernagel des Mittelfingers, von etwa 3 cm ergibt.

Mit den vorstehenden Dimensionierungsangaben ergibt sich eine Anordnung der Strahlenquelle(n) zur Bodenplatte, die zur Bestrahlung der Fingernägel gut geeignet ist, auch wenn man berücksichtigt, daß die Hände einerseits, d.h. die Länge der Finger, als auch die Länge der Fingernägel andererseits in einem gewissen Bereich schwanken können.

Da es sehr wichtig ist, die Hande richtig au der Bodenplatte unterhalb der Strahlenquelle(n) aufzulegen, sind Positionierungsmittel im Bereich der Bodenplatte für die zu bestrahlenden Hände dienlich. Sehr einfache aber dennoch wirksame Positionierungsmittel können durch muldenartige Vertiefungen in der Bodenplatte im Bereich der Einführöffnung beidseitig der Gehäuse-Längsachse und symmetrisch zu dieser gebildet werden, in die die Handballen der linken bzw. rechten Hand einliegen. Vorteilhafterweise können solche muldenartige Vertiefungen dem Handballen der menschlichen Hand angepaßt werden, wobei sich hierfür muldenartige Vertiefungen mit ovaler oder ellipsenförmiger Randkontur als geeignet erwiesen haben. Die großen Halbachsen solcher Mulden sollten in Richtung der Gehäuse-Längsachse weisen und sich mit dieser auf der zur Einführöffnung gerichteten Seite schneiden; der zwischen der großen Halbachse und der Gehäuse-Längsachse eingeschlossene Winkel beträgt hierbei bevorzugt 30° bis 40°. In Richtung der Längsachse des Bestrahlungsgerätes gesehen sollten die muldenartigen Vertiefungen in Richtung der Einführöffnung hin versetzt vor der Verbindungslinie zwischen den Enden des Bogenabschnittes liegen.

Ein weiteres, äußerst einfaches Positionierungsmittel kann durch Anschläge gebildet werden in Form von Zapfen, die zwischen zwei Fingern anliegen und die die Bewegung der Hand in Längsrichtung in das Gehäuse hinein begrenzen. Hierbei sind bevorzugt zwei Zapfen vorgesehen, die beidseitig der Gehäuse-Längsachse mit einem Abstand von 4 bis 6 cm positioniert sind und dann zwischen dem Daumen und dem Zeigefinger der linken bzw. rechten Hand zur Anlage gelangen. Um die Lage der Zapfen, insbesondere in ihrem Abstand zur Gehäuse-Längsachse, verändern zu können, je nach Breite der zu bestrahlenden Hände, sind in einer bevorzugten Ausführung des Bestrahlungsgerätes die Zapfen in einer Führung an der Bodenplatte in ihrem Abstand zur Gehäuse-Längsachse veränderbar. Hierzu ist eine Nut in der Bodenplatte geeignet, durch die sich die Zapfen erstrecken und entlang derer die Zapfen verschiebbar sind. Zum Feststellen der Zapfen können Schraubelemente oder aber Rastelemente vorgesehen werden. Um diese Zapfen auch von außen kontinuierlich verstellen zu können, werden die Zapfen unterhalb der Auflageplatte der Hand an Gewindestangen geführt, wobei die beiden Zapfen an einer gemeinsamen Gewindestange geführt sein können, so daß die Gewindestange gleichzeitig beide Zapfen verstellt.

Falls für die Strahlenquellen einzelne geradlinige Lampen eingesetzt werden, sollte die Länge dieser Strahlenquellen etwa 8 bis 10 cm betragen; alle Strahlenquellen sollte eine gleiche Länge aufweisen, wobei die Lampen im Bereich der Enden des Bogenabschnittes nur teilweise in ihrer Länge genutzt werden.

Weitere Einzelheiten und Merkmale der Erfindung ergeben sich aus der nachfolgenden Beschreibung eines Ausführungsbeispiels anhand der Zeichnung. In der Zeichnung zeigt

Figur 1 eine perspektivische Ansicht eines erfindungsgemäßen Fingernagel-Bestrahlungsgerätes mit Einsicht in das Innengehäuse,

Figur 2 das Fingernagel-Bestrahlungsgerät nach Figur 1 in einer Draufsicht mit abgenommener Deckenplatte,

Figur 3 einen Schnitt entlang der Längsachse des Bestrahlungsgerätes nach Figur 1 mit einer darin eingelegten, zu bestrahlenden Hand,

Figur 4 eine schematische Darstellung der Lampenanordnung mit einer linken und einer rechten Hand,

Figur 5 einen Schnitt entlang der Schnittlinie V—V in Figur 4,

Figur 6 eine perspektivische Ansicht einer gegenüber der Ausführungsform nach Fibur 1 abgewandelten Ausführungsform,

Figur 7 das Bestrahlungsgerät nach Figur 6 in einer Draufsicht mit abgenommener Deckenplatte und

Figur 8 einen Schnitt entlang der Schnittlinie VIII—VIII in Figur 7.

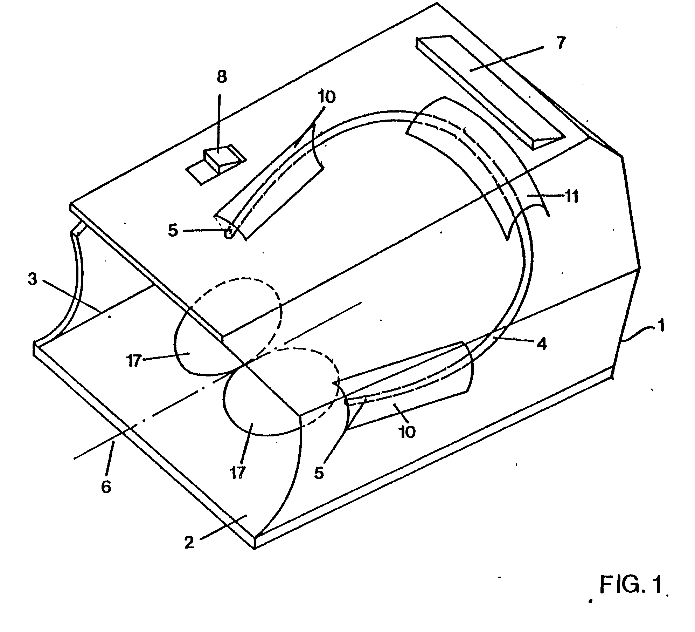

Das Fingernagel-Bestrahlungsgerät weist, wie Figur 1 zeigt, ein Gehäuse 1 mit einer Bodenplatte 2 auf. Das Gehäuse 1 besitzt an einer Stirnseite eine Einführöffnung 3, in die eine Hand eingeschoben werden kann. Die Bodenplatte 2 dient hierbei als Auflage für die jeweilige linke oder rechte Hand, deren Fingernägel bestrahlt werden sollen. Innerhalb des Gehäuses 1 befindet sich eine UV-Strahlenquelle in Form einer U-förmig gebogenen Bestrahlungsröhre 4. Die Achse dieser Bestrahlungsrohre 4 beschreibt einen Bogenabschnitt, der Teil der Außenkontur eines Flächenelementes eines Rotationskörpers von einem Kegelschnitt ist, also einen kreisförmigen, parabolfärmigen oder ellipsenförmigen Bogenabschnitt beschreibt. Die Enden 5 der Bestrahlungsröhre 4 sind in Richtung der Längsachse des Gehäuses, durch die strichpunktierte Linie 6 angedeutet, geneigt, wobei die Öffnung des Bogenabschnittes in Richtung der Einführöffnung 3 weist. Der mittlere Bereich der Bestrahlungsröhre 4 ist in einem größeren Abstand zur Bodenplatte 2 angeordnet als die beiden Enden 5. Entsprechend diesem Verlauf der Bestrahlungsröhre 4 besitzt der hintere Bereich des Gehäuses 1 eine größere Bauhöhe als der vordere Bereich mit der Einführöffnung 3. Diese Geometrie des Gehäuses 1 hat den Vorteil, daß die Person, deren Hand zum Bestrahlen der Fingernägel in dem Gehäuse 1 einliegt, keine Sicht auf die Bestrahlungsröhren 4 hat. Um einen Wärmestau im hinteren, höheren Bereich des Gehäuses 1 zu vermeiden, ist an der Oberseite des Gehäuses ein Lüftungsschlitz 7 vorgesehen. Zum Bedienen des Fingernagel-Bestrahlungsgerätes, d.h. zum An- und Ausschalten der Bestrahlungsröhre 4, ist an der Oberseite des Gehäuses 1 ein Ein-/Ausschalter 8 angeordnet sowie ein nicht näher dargestelltes Zeitschaltgerät (Timer).

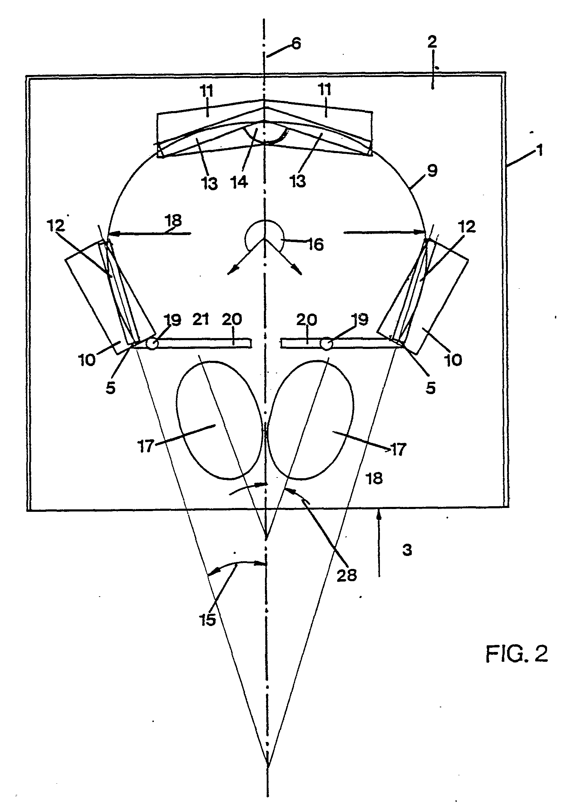

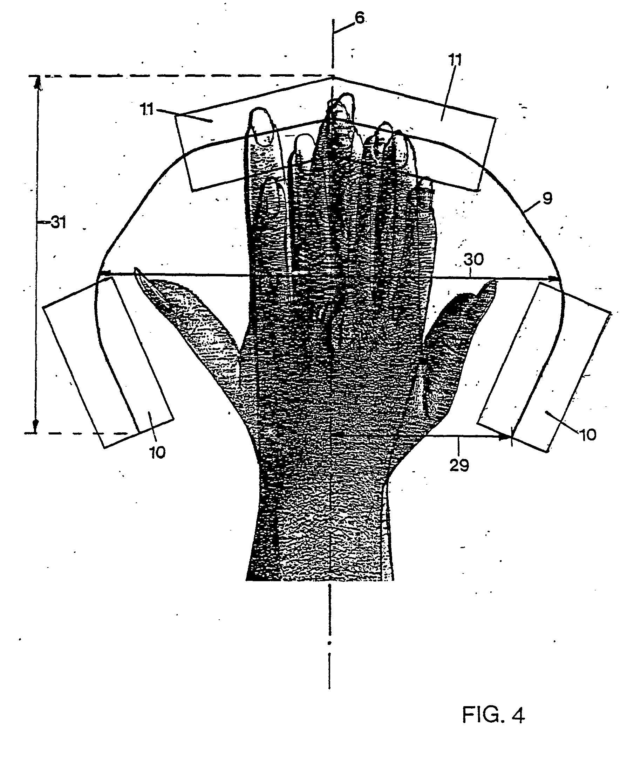

Die Geometrie der Bestrahlungsröhre 4 ist in den Figuren 2 und 4 verdeutlicht. In diesen beiden Figuren ist durch die durchgezogene Linie 9 die Achse der bogenförmigen Bestrahlungsröhre 4 nach Figur 1 angedeutet. Einzelnen Bereichen dieser gebogenen Bestrahlungsröhre 4 sind einzelne Reflektoren 10 und 11 zugeordnet. Die Reflektoren 11 sind in Bereichen der Bestrahlungsröhre 4 angeordnet, die sich über dem Zeige-, Mittel-, Ring- und kleinen Finger der Hand befinden. Die Reflektoren 10 sind den Endbereichen der Bestrahlungsröhre 4 zugeordnet, die die Strahlung auf die Daumen einer linken bzw. rechten Hand richten. Da gerade diese Bereiche der Bestrahlungsröhre 4, entlang derer sich die Reflektoren 10 und 11 befinden, wesentlich für eine gezielte Ausrichtung der UV-Strahlen auf die auszuhärtenden Fingernägel sind, ist eine Anordnung möglich, in der die Bestrahlungsröhre 4 aus einzelnen kurzen, geradlinigen Röhren zusammengesetzt ist, wobei sich jeweils im Endabschnitt der durchgezogenen Linie 9 eine einzelne Röhre befindet sowie jeweils eine Röhre im Mittelbereich der durchgezogenen Linie 9, die beidseitig der Längsachse 6 ansetzen. Solche Einzelröhren sind in Figur 2 mit den Bezugszeichen 12 und 13 bezeichnet. Die zwei Einzelröhren 13, die an die Gehäuse-Längsachse 6 angrenzen, verlaufen mit ihrer Achse in einem stumpfen Winkel zueinander, wobei der zwischen den beiden Achsen der Strahlenquellen der Einzelröhren 13 eingeschlossene Winkel 14 etwa 150° beträgt. Die Einzelröhren 12 im Bereich der Enden des Bogenabschnittes verlaufen jeweils unter einem Winkel 15 von 20° bis 25° zur Gehäuse-Längsachse 6. Durch diese spezielle Ausrichtung dieser Einzelröhren 12, 13, entsprechend einem bogenförmigen Verlauf einer durchgehenden Bestrahlungsröhre 4, fällt die Hauptabstrahlrichtung der beiden Einzelröhren 12 etwa senkrecht auf die Ebene der Fingernägel des rechten sowie des linken Daumens, die von der Längsachse 9 nach außen gerichtet auf der Bodenplatte 2 aufliegen. Die Zeigefinger, Mittelfinger und Ringfinger der linken und rechten Hand erfordern ein V-förmiges Bestrahlungsfeld, das durch die beiden Einzelröhren 13 gut angenähert wird.

Der durch die Strahlenquelle 4 oder die Strahlenquellen 12 und 13 gebildete Bogenabschnitt beschreibt einen Winkelbereich 16 von 270°.

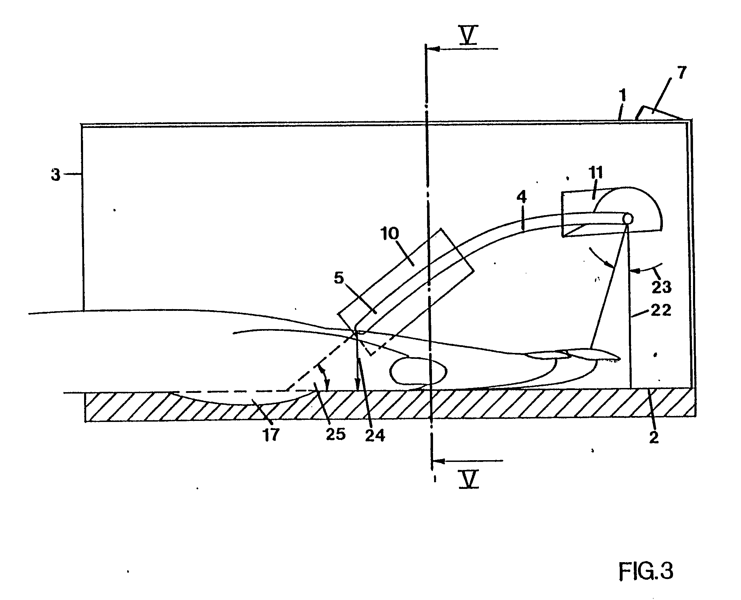

Um sowohl die linke Hand als auch die rechte Hand in geeigneter Weise unterhalb der Bestrahlungsröhre(n) zu positionieren, entsprechend der Darstellung in Figur 4, sind im Bereich der Bodenplatte 2 Positionierungsmittel vorgesehen, die in bevorzugter Ausführung durch zwei muldenartige Vertiefungen 17 beidseitig der Längsachse 9 im Bereich der Einführöffnung 3 gebildet sind (Figur 2). Bei diesen muldenartigen Vertiefungen 17 handelt es sich um Vertiefungen 17 mit einer ovalen oder ellipsenförmigen Randkontur, wobei deren große Halbachsen 18 in ihrer Verlängerung mit der Gehäuse-Längsachse 6 einen Winkel 28 von 20° einschließen. In diese muldenartigen Vertiefungen 17 legen sich die Handballen in Verlängerung des Daumens der linken bzw. rechten Hand ein, so daß von Bestrahlung zu Bestrahlung eine in etwa gleiche Positionierung der Hand gewährleistet ist. Sehr gut ist eine der muldenartigen Vertiefungen 17 in der Querschnittsdarstellung der Figur 3 zu erkennen.

Alternativ zu den muldenartigen Vertiefungen 17 als Positionierungshilfen der Hände können Zapfen 19 dienen, die vertikal zur Bodenplatte 2 ausgerichtet sind und, wie Figur 2 zeigt, in Schlitzen 20 im rechten Winkel zur Gehäuse-Längsachse 6 verschiebbar geführt sind. Diese Zapfen 19 können von einer linken Stellung in eine rechte Stellung verschoben werden In der linken Stellung wird der linke Zapfen 19 außerhalb des Auflagebereiches der Hand nach außen verschoben, während der rechte Zapfen 19 in Richtung der Längsachse 6 verschoben ist. Gegen diesen Zapfen 19 legt sich dann der Bereich der Hand im Ansatz zwischen Daumen und Zeigefinger, so daß die linke Hand aus Richtung der Einführöffnung 3 in Richtung der Längsachse 6 des Gehäuses 1 begrenzt einführbar ist. Entsprechend wird zum Bestrahlen der rechten Hand der linke Zapfen 19 in Richtung der Längsachse 6 und der rechte Zapfen 19 außerhalb des Auflagefeldes verrückt. Die beiden Zapfen 19 können an einer gemeinsamen Gewindestange 21 geführt werden, so daß gleichzeitig mit Verschieben des einen Zapfens 19 auch der andere Zapfen 19 verschoben wird.

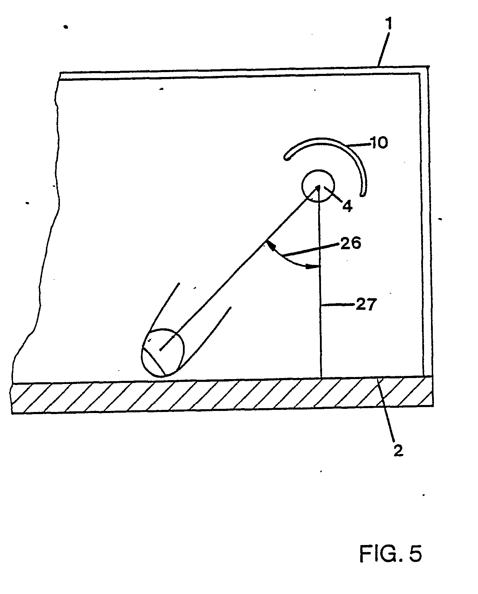

In der Querschnittsdarstellung der Figur 3 ist der Abstand der Bestrahlungsröhre 4 über der Bodenplatte 2 ersichtlich. Im Mittelbereich der Bestrahlungsröhre 4, der die Längsachse 6 des Gehäuses 1 schneidet und unter dem Zeige-, Mittel- und Ringfinger sowie der kleine Finger liegt, beträgt der Abstrahlwinkel 23 der Bestrahlungslampe 4 etwa 15°. Unter diesem Winkel 23 werden die Fingernägel, die in lockerer Handhaltung leicht nach vorne geneigt sind, in der Hauptabstrahlrichtung senkrecht bestrahlt. Die Höhe der Achse 9 der Bestrahlungsröhre 4 über der Bodenplatte 2 beträgt 70 mm. Die Enden der Bestrahlungsröhre 4 haben einen Abstand zur Bodenplatte 2, durch die Linie 24 angedeutet, von 30 mm. Die durch die Bestrahlungsröhre 4 aufgespannte Ebene ist in Richtung der Einführöffnung 3 hin geneigt; der Schnittwinkel 25 der Ebene in ihrer Verlängerung der Bodenplatte 2 beträgt in dem gezeigten Ausführungsbeispiel etwa 45°. In der Seitenansicht, wie sie die Figur 3 zeigt, verläuft die Bestrahlungsröhre 4 von ihrem mittleren Bereich zu den Enden hin leicht bogenförmig. Der Endbereich, dem der Reflektor 10 zugeordnet ist, ist im wesentlichen geradlinig ausgebildet, so daß er auch durch eine einzelne, diesem Reflektor 10 zugeordnete Bestrahlungsröhre ersetzt werden kann. Mit diesen Endabschnitten werden die Fingernägel der Daumen bestrahlt. Die Abstrahlrichtung der Bestrahlungsröhre 4 in ihrem Endbereich läßt sich der Figur 5 entnehmen. Die Enden der Bestrahlungsröhre 4, die seitlich versetzt zu den Daumen einer auf die Bodenplatte 2 aufgelegten Hand verlaufen, strahlen, durch die Ausrichtung der Reflektoren 10 bedingt, unter einem Winkel 26 zur Senkrechten 27 von etwa 45°. Unter dieser Abstrahlrichtung werden die Fingernägel der Daumen im wesentlichen senkrecht bestrahlt.

Der Bogenabschnitt bzw. die Bestrahlungsröhre 4, deren Verlauf durch die Achse 8 gezeigt ist, ist derart dimensioniert, daß, wie Figur 4 zeigt, die Strahlenquelle(n) im Bereich der Enden des Bogenabschnittes in einem Abstand 29 zur Gehäuse-Längsachse 6 von etwa 11 cm enden. Der Bogenabschnitt beschreibt den Teil einer Ellipse, deren große Halbachse 30 im rechten Winkel zur Gehäuse-Längsachse 6 verläuft. Die Länge der großen Halbachse 30 beträgt etwa 25 cm. Der maximale Abstand 31 des Schnittpunktes 32 des Bogenabschnittes mit der Gehäuse-Längsachse 6 von Schnittpunkt der Verbindungslinie zwischen den Enden des Bogenabschnittes mit der Gehäuse-Längsachse 6 beträgt etwa 17 cm.

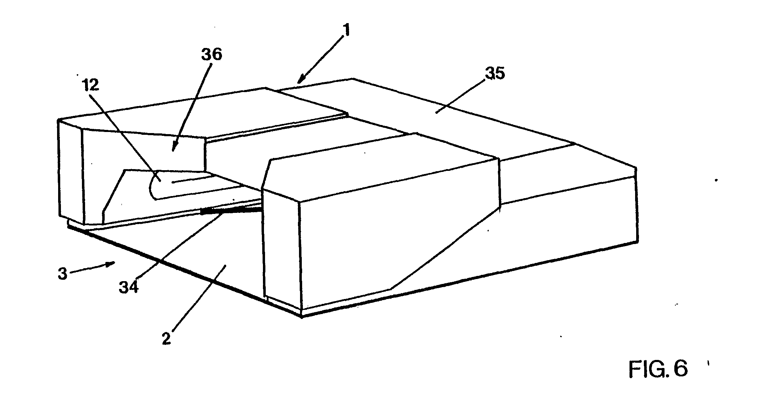

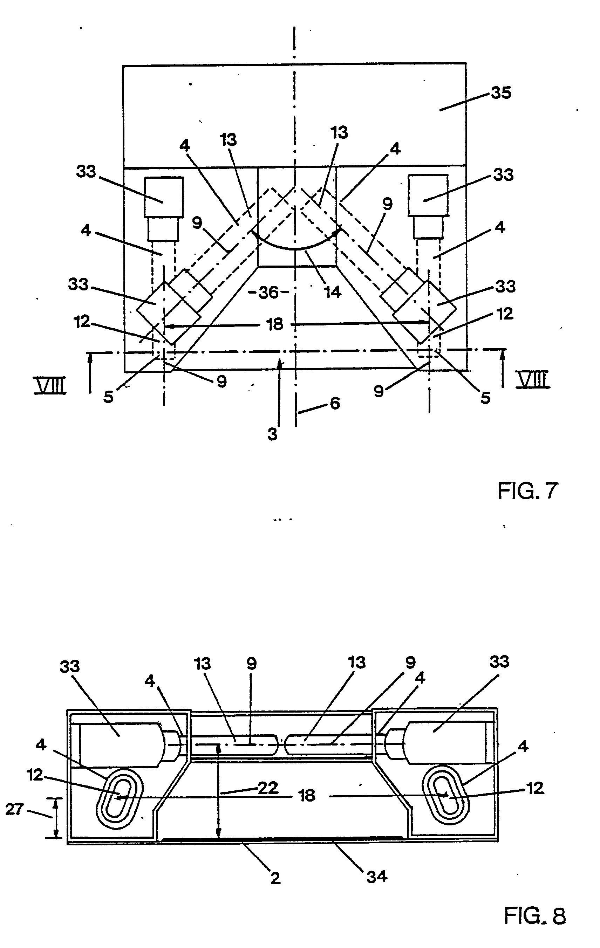

In Figur 6 ist ein Bestrahlungsgerät gezeigt, dessen Gehäuse 1 gegenüber der Ausführungsform nach Figur 1 an der Oberseite im Bereich der Einführöffnung 3 einen Ausschnitt 36 aufweist derart, daß der Handrücken einer in dem Gerät auf der Bodenplatte 2 aufliegenden Hand freigegeben ist. Von dem Gehäuse 1 werden seitlich nur die Bereiche der Bestrahlungslampen abgedeckt, so daß eine freie Einsicht in das Gerät zum Positionieren der Hand auf der Bodenplatte 2 gegeben ist. Die Anordnung der Bestrahlungsröhren 4 des Bestrahlungsgerätes nach Figur 6 ist den Figuren 7 und 8 zu entnehmen. In diesem Gerät sind vier Bestrahlungsröhren 4 mit einer gleichen Länge eingesetzt, wobei die beiden mittleren Strahlenquellen 13 mit ihrer Achse unter einem Winkel 14 von 90° zueinander ausgerichtet verlaufen. Die beiden Strahlenquellen 12, die parallel zur Außenwand des Gehäuses 1 verlaufen, sind unterhalb der beiden mittleren Strahlenquellen 13 bzw. unterhalb deren Sockel 33 angeordnet und bilden die Enden des Bogenabschnittes, der durch die Achsen 9 der Strahlenquellen angenähert ist. Von diesen beiden Strahlenquellen 12 wird nur der Endabschnitt zum Bestrahlen der Fingernägel bzw. zum Bestrahlen der Fingernägel einer rechten oder linken Hand ausgenutzt. In diesem Ausführungsbeispiel beträgt der Abstand 22 der Achsen der mittleren Strahlenquellen 13 von der Bodenplatte 2 6 cm; die Achsen der äußeren Strahlenquellen 12 verlaufen in einer Höhe von 20 mm oberhalb der durch die Bodenplatte 2 aufgespannten Ebene. Als Positionierungsmittel ist auf der Bodenplatte 2 ein Wulst 34 aufgesetzt, der in etwa der auf die Bodenplatte 2 projezierten Achsen 9 der der Strahlenquellen 13, wie sie in Figur 7 zu sehen sind, verläuft und einen Anschlag für die Fingerkuppen einer in das Gerät eingeführten Hand bildet. Alle Versorgungsteile des Gerätes, wie Transformator, Lüfter und Vorschaltgeräte für die Strahlenquellen 13 (diese Bauteile sind nicht näher gezeigt), sind in dem hinteren Gehäuseteil 35, getrennt vom Bestrahlungsraum, angeordnet.

**Patentansprüche**

1. Fingernagel-Bestrahlungsgerät zur Aushärtung von lichthärtenden Kunststoffen an künstlichen Fingernägeln mit einem einseitig eine Einführöffnung (3) aufweisenden Gehäuse (1), das auf einer als Auflage dienenden Bodenplatte (2) angeordnet ist, und mit mindestens einer langgestreckten Strahlenquelle (4), insbesondere einer UV-Strahlenquelle, die mit Abstand zur Bodenplatte symmetrisch zur Gehäuse-Längsachse (6) und zur Bodenplatte befestigt ist und auf ihrer der Bodenplatte abgewandten Seite von mindestens einem Reflektor (10) umgeben ist, dadurch gekennzeichnet, daß die mindestens eine Strahlenquelle (4) symmetrisch zur Gehäuse-Längsachse (6) und zur Bodenplatte (2) einen Bogenabschnitt beschreibend angeordnet ist mit zur Einführöffnung (3) weisender Öffnung des Bogenabschnittes, wobei der die Gehäuse-Längsachse (6) schneidende Bereich der Strahlenquelle (4) in einem größeren Abstand zur Bodenplatte (2) verläuft als deren Endabschnitte derart, daß die durch die Strahlenquelle (4) aufgespannte Fläche zur Einführöffnung (3) hin geneigt ist, und wobei der Bogenabschnitt Teil der Außenkontur eines Flächenelementes eines Rotationskörpers von einem Kegelschnitt ist.

2. Fingernagel-Bestrahlungsgerät nach Anspruch 1, dadurch gekennzeichnet, daß die mindestens eine Strahlenquelle (4) einen Bogenabschnitt von mindestens 180° beschreibt.

3. Fingernagel-Bestrahlungsgerät nach Anspruch 2, dadurch gekennzeich- net, daß die in Richtung der Gehäuse-Längsachse (6) weisenden im Bereich der Enden des Bogenabschnittes angeordneten Endabschnitte der Strahlenquelle(n) (4) geradlinig Verlaufen.

4. Fingernagel-Bestrahlungsgerät nach einem der Anspruch 1 bis 3, dadurch gekennzeichnet, daß die mindestens eine einen Bogenabschnitt beschreibende Strahlenquelle (4) in mindestens drei Strahlenquellen (12, 13) unterteilt ist, wobei jeweils eine der Strahlenquellen (12) ein Ende des Bogenabschnittes bildet und die dritte Strahlenquelle (13) quer zur Gehäuse-Längsachse (6) und symmetrisch zu dieser verlaufend angeordnet ist.

5. Fingernagel-Bestrahlungsgerät nach Anspruch 4, dadurch gekennzeichnet, daß die dritte Strahlenquelle in zwei mittlere Strahlenquellen (13) unterteilt ist, die sich beidseitig zur Gehäuse-Längsachse (6) erstrecken.

6. Fingernagel-Bestrahlungsgerät nach Anspruch 5, dadurch gekennzeichnet, daß die mittleren Strahlenquellen (13) durch gerade UV-Röhren gebildet sind.

7. Fingernagel-Bestrahlungsgerät nach Anspruch 6, dadurch gekennzeichnet, daß die beiden mittleren Strahlenquellen (13) in einem stumpfen Winkel (14) zueinander angeordnet sind.

8. Fingernagel-Bestrahlungsgerät nach einem der Ansprüche 1 bis 7, dadurch gekennzeichnet, daß die Strahlenquelle(n) (4; 13) im Bereich der Gehäuse-Längsachse (6) auf ihrer von der Bodenplatte (2) abgewandten Seite von dem mindestens einen Reflektor (11) umgeben ist.

9. Fingernagel-Bestrahlungsgerät nach Anspruch 8, dadurch gekennzeichnet, daß die Haupt-Abstrahlrichtung des oder der Reflektoren (11) zwischen 5° und 20° zur Flächennormalen der Bodenplatte (2) in Richtung der Gehäuseöffnung (3) geneigt verläuft.

10 Fingernagel-Bestrahlungsgerät nach Anspruch 3, dadurch gekennzeichnet, daß die Verlängerung der Achsen (9) der Endabschnitte der Strahlenquelle(n) (4; 12) mit der Gehäuse-Längsachse (6) einen Winkel von 20° bis 40° einschließen.

11. Fingernagel-Bestrahlungsgerät nach einem der Ansprüche 1 bis 10, dadurch gekennzeichnet, daß die Strahlenquelle(n) (12) im Bereich der Endabschnitte von Reflektoren (10) umgeben ist (sind), die eine in Richtung der Gehäuse-Längsachse (6) geneigt verlaufende Haupt-Abstrahlrichtung aufweisen.

12. Fingernagel-Bestrahlungsgerät nach Anspruch 11, dadurch gekennzeichnet, daß die Abstrahlrichtung mit der Flächennormalen der Bodenplatte (2) einen Winkel (26) zwischen 30° und 60° einschließt.

13. Fingernagel-Bestrahlungsgerät nach einem der Ansprüche 1 bis 12, dadurch gekennzeichnet, daß die Strahlenquelle(n) (4; 12) im Bereich der Enden des Bogenabschnittes in einem Abstand (29) zur Gehäuse-Längsachse (6) von etwa 10 bis 20 cm, insbesondere etwa 15 cm, angeordnet sind.

14. Fingernagel-Bestrahlungsgerät nach einem der Ansprüche 1 bis 13, dadurch gekennzeichnet, daß der maximale Abstand (31) der im Bereich der Gehäuse-Längsachse (6) quer zu dieser angeordneten Strahlenquellen (4; 13) vom Schnittpunkt (32) der Verbindungslinie zwischen den Enden des Bogenabschnittes mit der Gehäuse-Längsachse (6) zwischen 10 und 20 cm, insbesondere etwa 15 cm, beträgt.

15. Fingernagel-Bestrahlungsgerät nach einem der Ansprüche 1 bis 14, dadurch gekennzeichnet, daß die Bodenplatte (2) Positionierungsmittel für zwei Hände aufweist.

16. Fingernagel-Bestrahlungsgerät nach Anspruch 15, dadurch gekennzeichnet, daß die Positionierungsmittel jeweils eine in der Bodenplatte (2) im Bereich der Einführöffnung (3) beidseitig der Gehäuse-Längsachse (6) und symmetrisch zu dieser angeordnete muldenartige Vertiefungen (17) sind.

17. Fingernagel-Bestrahlungsgerät nach Anspruch 4, dadurch gekennzeichnet, daß die einzelnen Strahlenquellen (12; 13) eine Länge von etwa 8 bis 10 cm aufweisen.

18. Fingernagel-Bestrahlungsgerät nach Anspruch 15, dadurch gekennzeichnet, daß die Positionierungsmittel sich senkrecht von der Bodenplatte (2) erstreckende Zapfen (19) sind, die einen Anschlag zwischen den Fingern einer Hand bilden.

19. Fingernagel-Bestrahlungsgerät nach Anspruch 15, dadurch gekennzeichnet, daß die Positionierungsmittel durch einen Wulst (34) auf der Bodenplatte (2) gebildet sind, der einen Anschlag für die Fingerkuppen bildet.

20. Fingernagel-Bestrahlungsgerät nach einem der Ansprüche 1 bis 19, dadurch, gekennzeichnet, daß das Gehäuse an seiner Oberseite einen den Handrücken freilegenen Ausschnitt (36) aufweist.

**Revendications**

1. Appareil de traitement des ongles par rayonnement destiné à durcir des matières plastiques photodurcissables utilisées pour les faux ongles (ongles artificiels), qui comprend un boîtier (1) présentant une ouverture d'entrée (3) sur un côté, et agencé sur une plaque de base (2) servant de surface d'appui, et au moins une source de rayonnement (4) de forme allongée, notamment une source de rayons UV, qui est fixée à distance de la plaque de base, symétriquement par rapport à l'axe longitudinal (6) du boîtier et par rapport à la plaque de base, et entourée d'au moins un réflecteur (10) sur son côté qui est à l'opposé de la plaque de base, caractérisé en ce qu'au moins une source de rayonnement (4) est disposée symétriquement par rapport à l'axe longitudinal (6) du boîtier et à la plaque de base (2), en formant un arc, l'ouverture de l'arc étant dirigée vers l'ouverture d'entrée (3), la région de la source de rayonnement (4) qui coupe l'axe longitudinal (6) du boîtier s'étendant à une plus grande distance de la plaque de base (2) que ses segments extrêmes, de sorte que la surface encadrée par la source de rayonnement est inclinée vers l'ouverture d'entrée, l'arc constituant une partie du contour extérieur d'un élément de surface d'un corps de révolution donnant une section conique.

2. Appareil de traitement des ongles par rayonnement selon la revendication 1, caractérisé en ce que la source de rayonnement (4) ou les sources de rayonnement forme ou forment un arc d'au moins 180°.

3. Appareil de traitement des ongles par rayonnement selon la revendication 2, caractérisé en ce que les segments extrêmes de la source ou des sources de rayonnement (4) qui pointent vers l'axe longitudinal (6) du boîtier et qui sont disposés dans la région des extrémités de l'arc s'étendent en ligne droite.

4. Appareil de traitement des ongles par rayonnement selon une des revendications 1 à 3, caractérisé en c que la source ou les sources de rayonnement (4) qu forme ou forment au moins un arc est ou sont divisée(s) en au moins trois sources de rayonnement (12, 13), chacune des sources de rayonnement (12) formant une extrémité de l'arc et la troisième source de rayonnement (13) étant disposée transversalement à l'axe longitudinal (6) du boîtier et s'étendant symétriquement par rapport à cet axe.

5. Appareil de traitement des ongles par rayonnement selon la revendication 4, caractérisé en ce que la troisième source de rayonnement est subdivisée en deux sources de rayonnement centrales (13) qui s'étendent de part et d'autre de l'axe longitudinal (6) du boîtier.

6. Appareil de traitement des ongles par rayonnement selon la revendication 5, caractérisé en ce que les sources de rayonnement centrales (13) sont constituées par des tubes à UV rectilignes.

7. Appareil de traitement des ongles par rayonnement selon la revendication 6, caractérisé en ce que les deux sources de rayonnement centrales (13) sont disposées en formant entre elles un angle obtus (14).

8. Appareil de traitement des ongles par rayonnement selon une des revendications 1 à 7, caractérisé en ce que la source ou chacune des sources de rayonnement (4; 13) est entourée d'au moins un réflecteur (11) dans la région de l'axe longitudinal (6), sur son côté qui est à l'opposé de la plaque de base (2).

9. Appareil de traitement des ongles par rayonnement selon la revendication 8, caractérisé en ce que la direction principale d'émission du ou des réflecteur(s) (11) est inclinée sur la normale à la surface de la plaque de base (2) d'un angle compris entre 5° et 20°, en se dirigeant vers l'ouverture (3) du boîtier.

10. Appareil de traitement des ongles par rayonnement selon la revendication 3, caractérisé en ce que les prolongements des axes (9) des segments extrêmes de la source ou des sources de rayonnement (4; 12) forment un angle de 20° à 40° avec l'axe longitudinal (6) du boîtier.

11. Appareil de traitement des ongles par rayonnement selon une des revendications 1 à 10, caractérisé en ce que la source de rayonnement (12) ou chacune des sources de rayonnement (12) est entourée, dans la région des segments extrêmes, par des réflecteurs (10) qui présentent un axe d'émission principal incliné vers l'axe longitudinal (6) du boîtier.

12. Appareil de traitement des ongles par rayonnement selon la revendication 11, caractérisé en ce que la direction d'émission forme un angle (26) compris entre 30° et 60° avec la normale à la surface de la plaque de base (2).

13. Appareil de traitement des ongles par rayonnement selon une des revendications 1 à 12, caractérisé en ce que, dans la région des extrémités de l'arc, la source ou les sources de rayonnement (4; 12) est ou sont disposée(s) à une distance (29) de l'axe longitudinal (6) du boîtier qui est d'environ 10 à 20 cm, notamment d'environ 15 cm.

14. Appareil de traitement des ongles par rayonnement selon une des revendications 1 à 13, caractérisé en ce que la distance maximale (31) qui sépare les sources de rayonnement (4; 13) disposées dans la région de l'axe longitudinal (6) du boîtier transversalement à cet axe du point d'intersection (32) entre la ligne qui joint les extrémités de l'arc et l'axe longitudinal (6) du boîtier est comprise entre 10 et 20 cm, notamment à peu près égale à 15 cm.

15. Appareil de traitement des ongles par rayonnement selon une des revendications 1 à 14, caractérisé en ce que la plaque de base (2) présente des moyens de positionnement pour deux mains.

16. Appareil de traitement des ongles par rayonnement selon la revendication 15, caractérisé en ce que les moyens de positionnement sont constitués par des dépressions (17) en forme d'auget, ménagées dans la plaque de base (2), dans la région de l'ouverture d'entrée (3), de part et d'autre de l'axe longitudinal (6) du boîtier et symétriquement par rapport à cet axe.

17. Appareil de traitement des ongles par rayonnement selon la revendication 4, caractérisé en ce que les sources de rayonnement (12; 13) présentent une longueur d'environ 8 à 10 cm.

18. Appareil de traitement des ongles par rayonnement selon la revendication 15, caractérisé en ce que les moyens de positionnement sont des tiges (19) qui s'élèvent perpendiculairement sur la plaque de base (2) et qui forment une butée entre les doigts d'une main.

19. Appareil de traitement des ongles par rayonnement selon la revendication 15, caractérisé en ce que les moyens de positionnement sont formés par un bourrelet (34) prévu sur la plaque de base (2), qui forme une butée pour la pulpe des doigts.

20. Appareil de traitement des ongles par rayonnement selon une des revendications 1 à 19, caractérisé en ce que le boîtier présente sur sa face supérieure une échancrure (36) qui dégage le dos de la main.

**Claims**

1. Finger nail irradiation apparatus for the hardening of light-hardening plastics on artificial finger nails, with a housing (1) having an introduction opening (3) on one side, which housing is arranged on a base plate (2) serving as a support, and with at least one elongated radiation source (4), in particular a UV-radiation source, which is secured at a distance from the base plate symmetrically to the longitudinal axis (6) of the housing and to the base plate, and on its side facing away from the base plate is surrounded by at least one reflector (10), characterized in that the at least one radiation source (4) is arranged symmetrically to the longitudinal axis (6) of the housing and to the base plate (2) describing an arc section, with an opening of the arc section pointing towards the introduction opening (3), wherein the region of the radiation source (4) intersecting the longitudinal axis (6) of the housing runs at a greater distance from the base plate (2) than its end sections, such that the area set by the radiation source (4) is inclined towards the introduction opening (3), and wherein the arc section is a part of the outer contour of an area element of a rotation body of a conic section.

2. Finger nail irradiation apparatus according to Claim 1, characterized in that the at least one radiation source (4) describes an arc section of at least 180°.

3. Finger nail irradiation apparatus according to Claim 2, characterized in that the end sections of the radiation source(s) (4), pointing in the direction of the longitudinal axis (6) of the housing and arranged in the region of the ends of the arc section, run in a straight line.

4. Finger nail irradiation apparatus according to one of Claims 1 to 3, characterized in that the at least one radiation source (4) describing an arc section, is divided into at least three radiation sources (12, 13), wherein in each case one of the radiation sources (12) forms an end of the arc section and the third radiation source (13) is arranged transversely to the longitudinal axis (6) of the housing and running symmetrically thereto.

5. Finger nail irradiation apparatus according to Claim 4, characterized in that the third radiation source is divided into two central radiation sources (13), which extend on both sides of the longitudinal axis (6) of the housing.

6. Finger nail irradiation apparatus according to Claim 5, characterized in that the central radiation sources (13) are formed by straight UV-tubes.

7. Finger nail irradiation apparatus according to Claim 6, characterized in that the two central radiation sources (13) are arranged at an obtuse angle with respect to each other.

8. Finger nail irradiation apparatus according to one of Claims 1 to 7, characterized in that the radiation source(s) (4; 13) is/are surrounded in the region of the longitudinal axis (6) of the housing on their side facing away from the base plate (2) by at least one reflector (11).

9. Finger nail irradiation apparatus according to Claim 8, characterized in that the principal reflection direction of the reflector or reflectors (11) runs in an inclined manner between 5° and 20° to the surface normal of the base plate (2) in the direction of the housing opening (3).

10. Finger nail irradiation apparatus according to Claim 3, characterized in that the extension of the axes (9) of the end sections of the radiation source(s) (4; 12) form an angle of 20 to 40 with the longitudinal axis (6) of the housing.

11. Finger nail irradiation apparatus according to one of Claims 1 to 10, characterized in that the radiation source(s) (12) is/are surrounded in the region of the end sections by reflectors (10), which have a principal reflection direction running in an inclined manner in the direction of the longitudinal axis (6) of the housing.

12. Finger nail irradiation apparatus according to Claim 11, characterized in that the reflection direction forms an angle (26) of between 30° and 60° with the surface normal of the base plate (2).

13. Finger nail irradiation apparatus according to one of Claims 1 to 12, characterized in that the radiation source(s) (4; 12) are arranged in the region of the ends of the arc section at a distance (29) from the longitudinal axis (6) of the housing of approximately 10 to 20 cm, in particular approximately 15 cm.

14. Finger nail irradiation apparatus according to one of Claims 1 to 13, characterized in that the maximum distance (31) of the radiation sources (4; 13) arranged in the region of the longitudinal axis (6) of the housing, transversely thereto, from the point of intersection (32) of the connecting line between the ends of the arc section with the longitudinal axis (6) of the housing is between 10 and 20 cm, in particular approximately 15 cm.

15. Finger nail irradiation apparatus according to one of Claims 1 to 14, characterized in that the base plate (2) has positioning means for two hands.

16. Finger nail irradiation apparatus according to Claim 15, characterized in that the positioning means in each case are trough-like depressions (17) arranged in the base plate (2) in the region of the introduction opening (3) on both, sides of the longitudinal axis (6) of the housing and symmetrically thereto.

17. Finger nail irradiation apparatus according to Claim 4, characterized in that the individual radiation sources (12, 13) have a length of approximately 8 to 10 cm.

18. Finger nail irradiation apparatus according to Claim 15, characterized in that the positioning means are pins (19) extending vertically from the base plate (2), which form a stop between the fingers of one hand.

19. Finger nail irradiation apparatus according to Claim 15, characterized in that the positioning means are formed by a bulge (34) on the base plate (2), which forms a stop for the heads of the fingers.

20. Finger nail irradiation apparatus according to one of Claims 1 to 19, characterized in that the housing has on its upper side a cut-out (36) which exposes the back of the hand.

FIG. 1

FIG. 2

FIG.3

FIG. 4

FIG. 5

FIG. 6

FIG. 7

FIG. 8